# EUROPEAN PATENT SPECIFICATION

(11) **EP 2 805 888 B1**
(45) Date of publication and mention of the grant of the patent: **24.06.2020**
(21) Application number: 14169516.3
(22) Date of filing: 22.05.2014
(51) Int. Cl.: B64D 37/00, B64D 37/10, B64D 37/24, B64D 37/32

(54) **Pressure monitoring system for a fuel tank**
Drucküberwachungssystem für einen Kraftstofftank
Système de surveillance de pression pour un réservoir de carburant

(30) Priority: 22.05.2013 US 201313900057
(43) Date of publication of application: 26.11.2014
(73) Proprietor: Hamilton Sundstrand Corporation, Charlotte, NC 28217 (US)
(72) Inventor: Surawski, Eric Stephen, Wethersfield, CT 06109 (US); Kaslusky, Scott F., West Hartford, CT 06119 (US); Ernst, Jeffrey David, Wethersfield, CT 06109 (US)
(74) Representative: Dehns

(56) References cited:
- EP-A2- 2 332 836
- KR-A- 20090 101 994
- US-A1- 2005 067 045
- US-A1- 2011 263 035

## Description

### BACKGROUND OF THE INVENTION

The present invention relates to imposing an inert environment for a fuel tank with a gas, and more particularly to a pressure monitoring system for a fuel tank, as well as a method of monitoring over-pressurization of a fuel tank.

Conventional fuel tank systems require an inert gas to reduce unwanted chemical reactions of the fuel stored therein. Typically, a compressed air source is conditioned by separating various gases of the air source, with at least one of which used to replace air otherwise present in the fuel tank. The flow to the fuel tanks is controlled by a flow control valve at the outlet of a component that separates the various gases, thereby linking a high pressure air source and the fuel tanks. The high pressure air source introduces the capability to over-pressurize the fuel tanks in the event a fuel tank vent is blocked or submerged in fuel, leading to undesirable conditions, such as a loss of fuel or a fuel tank rupture which may cause a safety hazard.

A fuel tank supply system is disclosed in KR 10-2009-0101994 A1

### BRIEF DESCRIPTION OF THE INVENTION

According to the invention there is provided a fuel tank supply system as set forth in claim 1.

### BRIEF DESCRIPTION OF THE DRAWINGS

The subject matter which is regarded as the invention is particularly pointed out and distinctly claimed in the claims at the conclusion of the specification. The foregoing and other features and advantages of the invention are apparent from the following detailed description taken in conjunction with the accompanying drawings in which:
FIG. 1 is a schematic illustration of a pressure monitoring system for a fuel tank; and
FIG. 2 is a flow diagram illustrating a method of monitoring over-pressurization of the fuel tank.

### DETAILED DESCRIPTION OF THE INVENTION

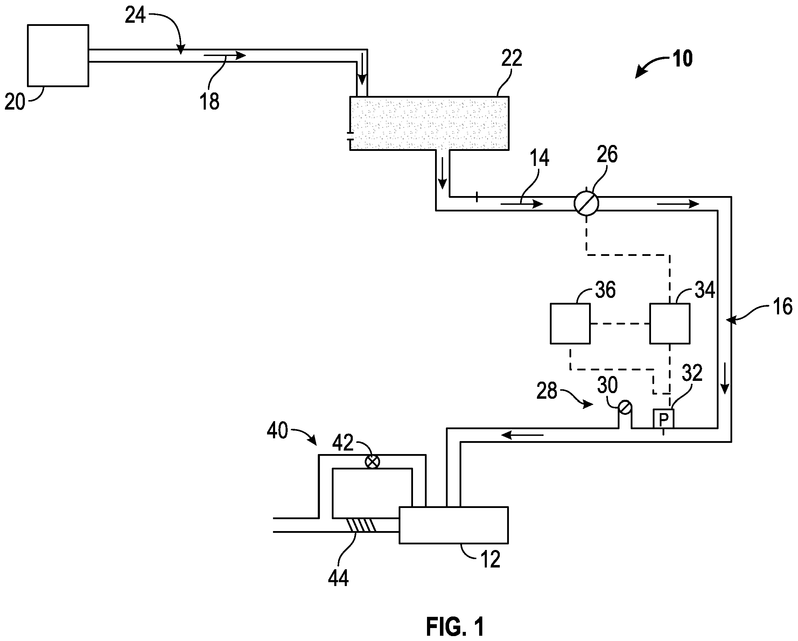

Referring to FIG. 1, a fuel tank supply system 10 is schematically illustrated. The fuel tank supply system 10 includes a fuel tank 12 used to contain fuel for energy generation that may vary widely among numerous applications. In one embodiment, the fuel tank supply system 10 is disposed on, and employed in conjunction with, an aircraft. Although certain embodiments herein pertain specifically to an aircraft, it is to be understood that numerous other applications in distinct industries may benefit from the embodiments described below. Although reference to a single fuel tank 12 is made, one can appreciate that the fuel tank supply system 10 may comprise a plurality of fuel tanks configured to store and distribute fuel contained therein. The type of fuel stored in the fuel tank 12 may vary.

Irrespective of the precise type of fuel stored within the fuel tank 12, it is desirable to provide an inert environment within the fuel tank 12 to reduce unwanted chemical reactions of the stored fuel. Such an environment is attained by supplying an inert gas 14 to the fuel tank 12 via a supply line 16. Various contemplated inert gases may be employed, with an exemplary embodiment of the inert gas 14 supplied comprising nitrogen. In an embodiment of the fuel tank supply system 10 disposed on an aircraft, an airflow 18 is provided from a fluid source 20. In one embodiment, the fluid source 20 comprises a compressed airflow generated from a standalone, onboard compressor. In yet another embodiment, the fluid source 20 comprises compressed air in the form of engine bleed airflow. Regardless of the particular source, the airflow 18 is routed to an air separation module 22 along an air separation module feed line 24. The air separation module 22 is configured to separate nitrogen and oxygen from the airflow 18, with the nitrogen enriched air employed to inert the fuel tank 12 upon routing along the supply line 16. Proximate an outlet of the air separation module 22 is a flow control valve 26 disposed within the supply line 16. The flow control valve 26 controls the flow rate of the inert gas 14 throughout the supply line 16. The flow control valve 26 may also be configured to vent the supply line 16. Alternatively, a separate vent may be present within the supply line 16.

Based on the need to avoid over-pressurization of the fuel tank 12, the fuel tank supply system 10 includes a primary vent structure 40 that comprises a vent 42 and a flame arrestor 44. The vent 42 is configured to vent the inert gas 14 to ambient and prevent over-pressurization. A feature of the fuel tank supply system 10 is included in the form of a pressure monitoring system 28. The pressure monitoring system 28 comprises a pressure relief valve 30 disposed downstream of the flow control valve 26 within the supply line 16, with the pressure relief valve 30 configured to detect a pressure differential between a supply line pressure and an ambient pressure outside of the supply line 16. The pressure relief valve 30 opens to vent and relieve the inert gas 14 of the supply line 16 upon detection of a predetermined pressure differential. The predetermined pressure differential will vary depending upon the particular application and the overall system characteristics of the fuel tank supply system 10. In one embodiment, the predetermined pressure differential employed to trigger opening of the pressure relief valve 30 ranges from about 2 psi (about 14 kPa) to about 15 psi (about 103 kPa).

The pressure monitoring system 28 also includes a pressure sensor 32 located downstream of the flow control valve 26 and is in operative communication with the supply line 16 to detect a pressure within the supply line 16. This detection, or measurement, is conducted independently of the pressure differential detected by the pressure relieve valve 30 and operates as a second pressure detection mechanism, in the supply line. Additionally, a secondary corrective action is associated with the pressure sensor 32, which may be beneficial if the pressure relieve valve 30 fails to open. Specifically, the pressure sensor 32 is in operative communication with a controller 34 and sends a signal to the controller 34 to convey the detected pressure within the supply line 16. The pressure communicated to the controller 34 is compared to a predetermined pressure limit that is programmed into the controller 34. As is the case with the predetermined pressure differential associated with the pressure relief valve 30, the predetermined pressure limit will vary depending upon the particular application and the overall system characteristics of the fuel tank supply system 10. Regardless of the precise predetermined pressure differential, the controller 34 is configured to modify the flow rate of the inert gas 14 flowing through the supply line 16 upon detection of the supply line pressure exceeding the predetermined pressure differential. In one embodiment, the controller 34 is in operative communication with the flow control valve 26 located proximate the outlet of the air separation module 22. The controller 34 modifies the flow rate of the inert gas 14 by partially or fully closing the flow control valve 26 to reduce or shut off the flow of the inert gas 14 entering the supply line 16, thereby preventing additional over-pressurization of the supply line 16 and consequently the fuel tank 12.

The redundant aspects of the pressure monitoring system 28 described above account for the possibility that the primary vent structure 40 fails to operate properly. Specifically, failure of the vent 42 to vent to ambient and/or malfunction of the flame arrestor 44. A failure of the vent 42 to open may occur due to a number of reasons. In some embodiments, the vent 42 is disposed in the fuel tank 12 itself, or proximate an outlet of the fuel tank 12. In such an embodiment, the fuel stored within the fuel tank 12 may submerge the vent 42, thereby impeding desired venting. Such a situation may be imposed during maneuvers of the vehicle, such as an aircraft, in such an embodiment. The redundant aspect of the pressure monitoring system 28 advantageously provides secondary monitoring and corrective action capability. Specifically, the supply line 16 may be vented at a remote location, with respect to the fuel tank 12. In one embodiment, the flow control valve 26 and/or is the pressure relief valve 30 are located closer in proximity to the air separation module 22 than to the fuel tank 12.

In addition to the corrective action described in detail above, the controller 34 is in operative communication with an operator computer 36, such as a flight crew computer in the case of an aircraft embodiment, and is configured to generate a signal to a system operator that an over-pressurized condition is present, thereby prompting the operator to perform appropriate actions. Alternatively, the pressure sensor 32 may be in operative communication with the operator computer 36 to directly send a signal that alerts the operator, or flight crew, of the over-pressurized condition.

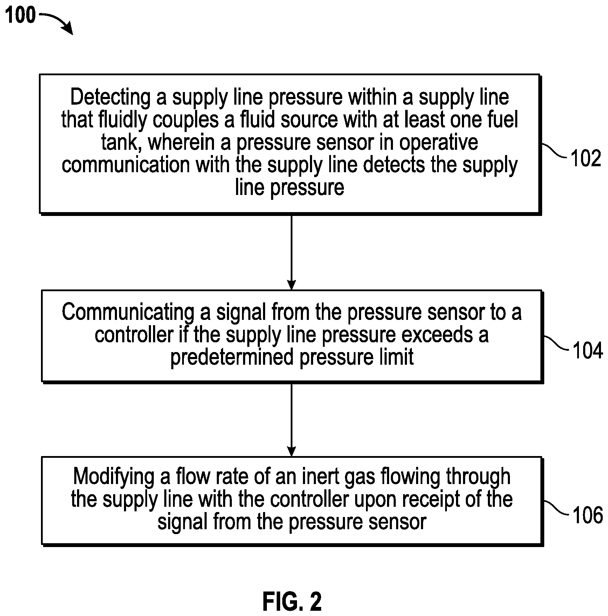

A method 100 of monitoring over-pressurization of the fuel tank 12 is also disclosed herein, as illustrated in FIG. 2 and with reference to FIG. 1. The fuel tank supply system 10, and more particularly the pressure monitoring system 28, has been previously described and specific structural components need not be described in further detail. The method 100 of monitoring over-pressurization of the fuel tank 12 includes detecting 102 a supply line pressure within the supply line 16 that fluidly couples the fluid source 20 with the fuel tank 12, wherein the pressure sensor 32 in operative communication with the supply line 16 detects the supply line pressure. A signal is communicated 104 from the pressure sensor 32 to the controller 34 if the supply line pressure exceeds a predetermined pressure limit. The flow rate of the inert gas 14 is modified 106 with the controller 34 upon receipt of the signal from the pressure sensor 32. As described above, the controller 34 initiates corrective actions in response to detection of a supply line pressure exceeding the predetermined pressure limit and generates signals to an operator of the system.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A fuel tank supply system comprising:
at least one fuel tank (12);
a pressure monitoring system (28) for the at least one fuel tank (12) and comprising:
a supply line (16) fluidly coupling a fluid source (20) with the at least one fuel tank (12) for supplying an inert gas (14) to the at least one fuel tank (12);
a pressure relief valve (30) in communication with the supply line (16) configured to detect a pressure differential between a supply line pressure (16) and an ambient pressure;
a pressure sensor (32) configured to detect the supply line pressure; and
a controller (34) in operable communication with the pressure sensor (32), wherein the controller (34) is configured to modify a flow rate of the inert gas (14) in the supply line (16) upon detection of the supply line pressure exceeding a predetermined pressure limit;
**characterised by** the pressure monitoring system further comprising:
an air separation module (22) configured to receive a compressed air source from the fluid source (20), wherein the air separation module (22) separates the inert gas (14) from the compressed air source for routing to the supply line (16); and
a flow control valve (26) disposed in the supply line (16) and located upstream of the pressure relief valve (30) and the pressure sensor (32);
wherein the controller (34) is in operative communication with the flow control valve (26),
the flow control valve (26) is configured to vent contents of the supply line (16), and the flow control valve (26) is located closer in proximity along the length of the supply line (16) to the air separation module (22) than to the at least one fuel tank (12);
and by the fuel tank supply system further comprising a primary vent structure (40) including a vent (42) for venting inert gas in the fuel tank (12) to ambient, and a flame arrestor (44).

2. The fuel tank supply system of claim 1, wherein the inert gas (14) comprises nitrogen.

3. The fuel tank supply system of claim 1 or 2, wherein the fluid source (20) is a compressed air source.

4. The fuel tank supply system of any preceding claim, wherein the pressure monitoring system (28) is disposed on an aircraft.

5. The fuel tank supply system of claim 4, wherein the fluid source (20) is a compressed air source comprising engine bleed airflow.

6. The fuel tank supply system of claim 5, wherein the fluid source (20) is a compressed air source comprising compressor airflow.

7. The fuel tank supply system of any of claims 4 to 6, wherein the controller (34) is in operative communication with an operator computer.

8. The fuel tank supply system of any preceding claim, wherein the pressure relief valve (30) is configured to vent the inert gas (14) of the supply line (16) upon detection of a predetermined pressure differential.

9. The fuel tank supply system of claim 8, wherein the predetermined pressure differential ranges from about 2 psi (about 14 kPa) to about 15 psi (about 103 kPa).

## Patentansprüche

1. Kraftstofftankzufuhrsystem, umfassend:
zumindest einen Kraftstofftank (12);
ein Drucküberwachungssystem (28) für den zumindest einen Kraftstofftank (12) und umfassend:
eine Zuleitung (16), die eine Fluidquelle (20) fluidisch an den zumindest einen Kraftstofftank (12) koppelt, um dem zumindest einen Kraftstofftank (12) ein Inertgas (14) zuzuführen;
ein Überdruckventil (30) in Verbindung mit der Zuleitung (16), das konfiguriert ist, um ein Druckdifferential zwischen einem Zuleitungsdruck (16) und einem Umgebungsdruck zu erfassen;
einen Drucksensor (32), der konfiguriert ist, um den Zuleitungsdruck zu erfassen; und
eine Steuerung (34) in Wirkverbindung mit dem Drucksensor (32), wobei die Steuerung (34) konfiguriert ist, um bei Erfassen, dass der Zuleitungsdruck eine vorbestimmte Druckgrenze überschreitet, eine Strömungsrate des Inertgases (14) in die Zuleitung (16) zu modifizieren;
**dadurch gekennzeichnet, dass** das Drucküberwachungssystem ferner Folgendes umfasst:
ein Luftzerlegungsmodul (22), das konfiguriert ist, um eine Quelle verdichteter Luft von der Fluidquelle (20) zu empfangen, wobei das Luftzerlegungsmodul (22) das Inertgas (14) zum Leiten zu der Zuleitung (16) von der Quelle verdichteter Luft trennt; und
ein Strömungssteuerventil (26), das in der Zuleitung (16) angeordnet ist und sich stromaufwärts des Überdruckventils (30) und des Drucksensors (32) befindet;
wobei die Steuerung (34) in Wirkverbindung mit dem Strömungssteuerventil (26) steht,
wobei das Strömungssteuerventil (26) konfiguriert ist, um Inhalte der Zuleitung (16) abzulassen und sich das Strömungssteuerventil (26) entlang der Länge der Zuleitung (16) in geringerem Abstand zu dem Luftzerlegungsmodul (22) befindet als zu dem zumindest einen Kraftstofftank (12);
und dadurch, dass das Kraftstofftankzufuhrsystem ferner eine primäre Abzugstruktur (40) umfasst, die einen Abzug (42) zum Ablassen von Inertgas in dem Kraftstofftank (12) in die Umgebung und eine Flammenrückschlagsicherung (44) beinhaltet.

2. Kraftstofftankzufuhrsystem nach Anspruch 1, wobei das Inertgas (14) Stickstoff umfasst.

3. Kraftstofftankzufuhrsystem nach Anspruch 1 oder 2, wobei die Fluidquelle (20) eine Quelle verdichteter Luft ist.

4. Kraftstofftankzufuhrsystem nach einem der vorangehenden Ansprüche, wobei das Drucküberwachungssystem (28) an einem Luftfahrzeug angeordnet ist.

5. Kraftstofftankzufuhrsystem nach Anspruch 4, wobei die Fluidquelle (20) eine Quelle verdichteter Luft ist, die einen Triebwerkszapfluftstrom umfasst.

6. Kraftstofftankzufuhrsystem nach Anspruch 5, wobei die Fluidquelle (20) eine Quelle verdichteter Luft ist, die einen Verdichterluftstrom umfasst.

7. Kraftstofftankzufuhrsystem nach einem der Ansprüche 4 bis 6, wobei die Steuerung (34) in Wirkverbindung mit einem Bedienercomputer steht.

8. Kraftstofftankzufuhrsystem nach einem der vorangehenden Ansprüche, wobei das Überdruckventil (30) konfiguriert ist, um das Inertgas (14) der Zuleitung (16) bei Erfassung eines vorbestimmten Druckdifferentials abzulassen.

9. Kraftstofftankzufuhrsystem nach Anspruch 8, wobei das vorbestimmte Druckdifferential in einem Bereich von etwa 2 psi (etwa 14 kPa) bis etwa 15 psi (etwa 103 kPa) liegt.

## Revendications

1. Système d'alimentation d'un réservoir de carburant, comprenant :
au moins un réservoir de carburant (12) ;
un système de surveillance de pression (28) pour l'au moins un réservoir de carburant (12) et comprenant :
une conduite d'alimentation (16) couplant fluidiquement une source de fluide (20) avec l'au moins un réservoir de carburant (12) pour fournir un gaz inerte (14) à l'au moins un réservoir de carburant (12) ;
une soupape de surpression (30) en communication avec la conduite d'alimentation (16) conçue pour détecter une différence de pression entre la pression dans une conduite d'alimentation (16) et la pression ambiante ;
un capteur de pression (32) conçu pour détecter la pression dans la conduite d'alimentation ; et
un dispositif de commande (34) en communication fonctionnelle avec le capteur de pression (32), dans lequel le dispositif de commande (34) est conçu pour modifier un débit du gaz inerte (14) dans la conduite d'alimentation (16) lorsqu'il est détecté que la pression dans la conduite d'alimentation dépasse une limite de pression prédéterminée ;
**caractérisé en ce que** le système de surveillance de pression comprend en outre :
un module de séparation d'air (22) conçu pour recevoir une source d'air comprimé de la source de fluide (20), dans lequel le module de séparation d'air (22) sépare le gaz inerte (14) de la source d'air comprimé pour l'acheminer vers la conduite d'alimentation (16) ; et
une soupape de commande de débit (26) disposée dans la conduite d'alimentation (16) et située en amont de la soupape de surpression (30) et du capteur de pression (32) ;
dans lequel le dispositif de commande (34) est en communication fonctionnelle avec la soupape de commande de débit (26),
la soupape de commande de débit (26) est conçue pour purger le contenu de la conduite d'alimentation (16), et la soupape de commande de débit (26) est située plus près du module de séparation d'air (22) le long de la conduite d'alimentation (16) que l'au moins un réservoir de carburant (12) ;
et **en ce que** le système d'alimentation du réservoir de carburant comprend en outre une structure de purge primaire (40) comprenant un trou d'aération (42) pour évacuer le gaz inerte du réservoir de carburant (12) dans l'air ambiant, et un pare-flammes (44).

2. Système d'alimentation du réservoir de carburant selon la revendication 1, dans lequel le gaz inerte (14) comprend de l'azote.

3. Système d'alimentation du réservoir de carburant selon la revendication 1 ou 2, dans lequel la source de fluide (20) est une source d'air comprimé.

4. Système d'alimentation du réservoir de carburant selon une quelconque revendication précédente, dans lequel le système de surveillance de pression (28) est disposé sur un aéronef.

5. Système d'alimentation du réservoir de carburant selon la revendication 4, dans lequel la source de fluide (20) est une source d'air comprimé comprenant un flux d'air de purge du moteur.

6. Système d'alimentation du réservoir de carburant selon la revendication 5, dans lequel la source de fluide (20) est une source d'air comprimé comprenant un flux d'air du compresseur.

7. Système d'alimentation du réservoir de carburant selon l'une quelconque des revendications 4 à 6, dans lequel le dispositif de commande (34) est en communication fonctionnelle avec un ordinateur de l'opérateur.

8. Système d'alimentation du réservoir de carburant selon une quelconque revendication précédente, dans lequel la soupape de surpression (30) est conçue pour purger le gaz inerte (14) de la conduite d'alimentation (16) lors de la détection d'une différence de pression prédéterminée.

9. Système d'alimentation du réservoir de carburant selon la revendication 8, dans lequel la différence de pression prédéterminée est comprise entre environ 2 psi (environ 14 kPa) et environ 15 psi (environ 103 kPa).
